(19) **Europäisches Patentamt European Patent Office Office européen des brevets**

(11) **EP 1 480 356 B1**

(12) **EUROPEAN PATENT SPECIFICATION**

(45) Date of publication and mention
of the grant of the patent:
**06.07.2011  Bulletin 2011/27**

(51) Int Cl.:
***H04B 7/26*** (2006.01)

(21) Application number: **04101975.3**

(22) Date of filing: **07.05.2004**

(54) **TIME ADJUSTMENT METHOD IN TELECOMMUNICATION SYSTEM, AND TELECOMMUNICATION SYSTEM**

Verfahren zur Anpassung der Zeit in einem Telekommunikationssystem und entsprechendes Telekommunikationssystem

Méthode d'ajustement temporel dans un système de télécommunications et système de télécommunications correspondant

(84) Designated Contracting States:
**AT BE BG CH CY CZ DE DK EE ES FI FR GB GR HU IE IT LI LU MC NL PL PT RO SE SI SK TR**

(30) Priority: **20.05.2003  FI 20030749**
**02.07.2003  US 611679**

(43) Date of publication of application:
**24.11.2004  Bulletin 2004/48**

(73) Proprietor: **Nokia Corporation**
**02150 Espoo (FI)**

(72) Inventor: **Kauhanen, Jouni**
**90540 Oulu (FI)**

(74) Representative: **Antila, Harri Jukka Tapani**
**Kolster Oy Ab**
**P.O. Box 148**
**Iso Roobertinkatu 23**
**00121 Helsinki (FI)**

(56) References cited:
**EP-A- 1 174 726    EP-A- 1 217 779**

## Description

### Field

The invention relates to a time adjustment method and mechanism in a telecommunication system, a time stamping method and mechanism in a telecommunication system, and a telecommunication system.

### Background

In modem telecommunication systems, timing and time stamping of signals transmitted from a base station in a telecommunication system can be used, for example, for synchronization and positioning purposes.

In a prior art time stamping process, the transmission time of a signal transmitted from the base station is determined by using the time point of generating the signal in the base band parts of the transmitter of the base station, and possibly information on the delay between generating the signal in the base band parts and transmitting the signal from an antenna unit of the base station. The delay is caused by electric components and wires between the base band part and the antenna unit.

The prior art solutions in time characterization of signals transmitted from the base station, however, are insufficient in accuracy to fulfil the tightened requirements of time characterization. The insufficiency arises from unpredictable nature of the electronics in radio transmitters, giving rise to unpredictable variation in the propagation time of a signal between the base band parts and the antenna of the base station. The insufficiency in accuracy of the time characterization causes, for example, inaccuracy in measuring the propagation time of a signal between the base station and a mobile station, giving rise to errors in location information of the mobile station.

EP 1174726 discloses an apparatus, system and method for measuring timing of a signal transmitted from a wireless base station antenna. The apparatus includes an accurate time reception antenna, a cellular antenna that receives the reception time of the signal transmitted from the wireless base station antenna, and a reference clock generator that compares the reception time value and the accurate time value. The system includes an accurate time generator of an accurate time value, a wireless base station antenna that transmits a first signal, and a transmission timing measurement apparatus having a first antenna and a second antenna that receives the accurate time value and the first signal, and that outputs an offset of the first signal from the accurate time value, and may additionally include a center for the storage offsets. The method includes the steps of receiving an accurate time, receiving the reception time transmitted from the wireless base station antenna, receiving, at a reference generator, the reception time value and the accurate time value, and comparing of the reception time value and the accurate time value into a reference output.

It is desirable to consider improved tools for time stamping and time adjustment.

### Brief description of the invention

An object is to disclose a time adjustment method and mechanism in a telecommunication system, an improved time stamping method and mechanism in a telecommunication system, and an improved telecommunication system. According to a first aspect of the invention, there is provided a time stamping method in a telecommunication system, comprising: receiving, in a base station, a time reference signal providing time reference in the telecommunication system; generating an idle period in the transmission of a base station; determining, in the base station, time characteristics of the idle period relative to the time reference by means of a power measurement on the idle period; and providing at least a portion of data to be transmitted from the base station with time characteristics proportional to the time reference by using the time characteristics of the idle period.

According to another aspect, there is provided a time adjustment method in a telecommunication system, comprising: receiving, in a base station, a time reference signal providing time reference in the telecommunication system; generating a test signal in the base station; detecting the test signal in the base station; and providing the test signal with time characteristics proportional to the time reference based on detection of the test signal and the time reference.

According to another aspect of the invention, there is provided a telecommunication system comprising: a base station for providing radio transmission and reception for mobile stations; wherein the base station comprises a time reference signal receiving unit for receiving a time reference signal providing time reference in the telecommunication system; wherein the base station comprises an idle period generator for generating an idle period in the transmission of the base station; wherein the base station comprises a detecting unit operationally connected to the idle period generator and the time reference signal receiving unit for determining time characteristics of the idle period relative to the time reference by means of a power measurement; and a time stamping unit operationally connected to the detecting unit for providing at least a portion of data to be transmitted from the base station with the time characteristics proportional to the time reference by using the time characteristics of the idle period.

According to another aspect, there is provided a time adjustment mechanism in a telecommunication system, comprising: receiving means for receiving, in a base station, a time reference signal providing time reference in the telecommunication system; generating means for generating a test signal in the base station; detecting means for detecting the test signal in the base station; and providing means for providing the test signal with time characteristics proportional to the time reference based on detection of the test signal and the time reference.

According to yet another aspect of the invention, there is provided a time stamping mechanism in a telecommunication system, comprising: receiving means for receiving, in a base station, a time reference signal providing time reference in the telecommunication system; generating means for generating an idle period in the transmission of a base station; determining means for determining, in the base station, time characteristics of the idle period relative to the time reference by means of a power measurement; and providing means for providing at least a portion of data to be transmitted from the base station with time characteristics proportional to the time reference by using time characteristics of the idle period.

Preferred embodiments of the invention are described in the dependent claims.

The invention is based on carrying out a measurement on a signal generated in the base station, and providing the signal with time characteristics proportional to the time reference obtained from a satellite signal.

The methods and system of the invention provide several advantages. The invention provides an accurate time characterization for a signal transmitted from the base station. In an embodiment of the invention, the invention enables accurate positioning of a mobile station.

**List of drawings**

In the following, the invention will be described in greater detail with reference to embodiments and the accompanying drawings, in which

Figure 1 shows an example of a structure of a cellular telecommunication system;

Figure 2 shows an example of an idle period;

Figure 3 shows an example of a data structure according to an embodiment of the invention;

Figure 4 shows an example of a structure of a telecommunication system;

Figure 5 is a flow diagram illustrating embodiments of the invention;

Figure 6 shows an example of test signals according to embodiments of the invention; and

Figure 7 is a second flow diagram illustrating embodiments of the invention.

**Description of embodiments**

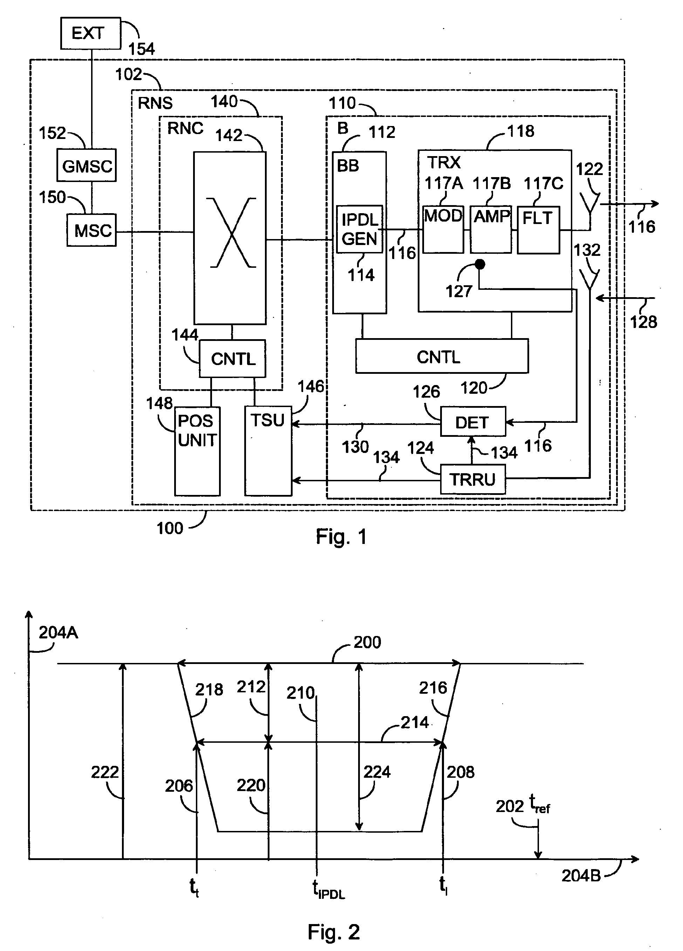

A simplified structure of a telecommunication system 100 at the network element level is illustrated in Figure 1. The radio-independent layer of the telecommunication system is represented by a mobile switching centre (MSC) 150 and a gateway mobile services switching centre (GMSC) 152 located between the mobile switching centre 150 and external networks 154, such as the public land mobile network (PLMN) or the public switched telephone network (PSTN). The telecommunication system 100 may also include packet-switched network elements, such as a serving GPRS support node (SGSN) and a gateway GPRS support node (GGSN) for supporting GPRS (General Packet Radio Service).

The tasks the mobile services switching centre 150 performs include: switching, paging, user equipment location registration, handover management, collection of subscriber billing information, encryption parameter management, frequency allocation management, and echo cancellation. The mobile switching centre 150 contains functionalities related to mobile station subscription authorization and management of call-related and non-call related positioning of mobile stations.

The gateway mobile switching centre 152 is responsible for circuit-switched connections between the telecommunication system 100 and external networks 154.

The telecommunication system 100 comprises a radio network subsystem (RNS) 102, which comprises a radio network controller (RNC) 140 and at least one base station 110.

Base station is a generic name for a network element providing radio transmission and reception for mobile stations in the telecommunication network area. The technique in implementing the radio interface may vary between different telecommunication systems. For example, in UMTS (Universal Mobile Telephone System), the base station 110 is called a Node B, which utilizes a wideband code division multiple access technique (WCDMA) in implementing the radio interface. The structure of the exemplified telecommunication system is described in terms of UMTS network elements, which can easily be associated with their counterparts in other telecommunication systems by a person skilled in the art.

The radio network controller 140 controls the base station 110, being responsible for the following tasks, for instance: radio resource management of the base station 110, inter-cell handovers, allocation of frequencies to the base station 110, management of frequency hopping sequences, measurement of time delays on the uplink, implementation of the operation and maintenance interface, and power control.

The radio network controller 140 comprises a group switching field 142 and a control unit 144. The group switching field 142 is used for switching speech and data and for connecting signalling circuits. The control unit 144 carries out call controlling, mobility management, collection of statistics, signalling and control and management of resources.

The base station 110 comprises a control unit 120, a base band unit (BB) 112, a transceiver unit (TRX) 118, and an antenna unit 122.

The base band unit 112 includes a digital signal processor, ASIC circuits (application specific integrated circuit), routes, memory means and software e.g. for encoding and decoding signals, performing error correction functions and possibly for interleaving and de-interleaving bits.

The transceiver unit 118 may comprise a modulator unit 117A connected to the base band unit 112 for performing a conversion between a base band frequency and a radio frequency providing the radio connection between the base station 110 and a mobile station. The modulator unit 117A may comprise, for example, a modulator for up-converting a base band signal into a radio frequency used in the downlink direction.

The transceiver unit 118 may further comprise an amplifier unit 117B connected to the modulator unit 117A for amplifying a radio frequency. The amplifier unit 117B may comprise, for example, a linear power amplifier for amplifying the downlink radio signal.

The transceiver unit 118 may further comprise a filter unit 117C for providing desired frequency properties of the radio frequency spectrum of the radio frequency signal passing the transceiver 118. In an embodiment, the filter unit 117C is a duplex filter for providing a separation between the uplink and downlink radio signals.

The control unit 120 controls the transceiver unit 118 and the base band unit 112.

The base station 110 comprises a time reference signal receiving unit 124 for receiving a time reference signal 128 and providing time reference 134 in the telecommunication system. In an embodiment, the time reference signal receiving unit 124 is connected to an antenna 132 for time reference signal 128 reception. The time reference signal receiving unit 124 includes, for example, a radio receiver for receiving a radio signal carrying the time reference 134, an analogue-to-digital converter for sampling the received signal, a digital signal processor for processing the digitized signal and a decoder for decoding the processed signal. In an embodiment, at least some of the tasks of the time reference signal receiving unit 124 are performed in the base station controller 120 or in the radio network controller 140.

In an embodiment, the time reference signal 128 contains the universal time coordinates (UTC). The universal time coordinates may be used to define another time scale proportional to the universal time coordinates in the base station 110.

In an embodiment, the time reference signal 128 is transmitted from a satellite system distributed in geostationary orbits. Such satellite systems are, for example, the global positioning system (GPS) and the global navigation satellite system (GLONASS).

In an embodiment, the time reference signal 128 is composed of at least four components transmitted from separate satellites, and the position of a base station 110 and the time reference 134 are determined using the four components. In an embodiment, the time reference signal is a 1 PPS (Pulse Per Second) signal of GPS.

In an embodiment, the time reference signal receiving unit 124 supports a "position hold mode" enabling utilization of less than four components of the time reference signal. The "position hold mode" is based on specific timing software.

In an embodiment, the time reference signal 128 is delivered to the base station 110 by means of electrical or optical guides, in which case the antenna 132 is not needed. The time reference signal 128 may contain information on the global time or the internal time of the telecommunication system. In an embodiment, the time reference signal 128 is generated in a location management unit (LMU) or a related network element providing time reference.

The concept of proportionality between the time characteristics of a signal, such as an idle period 116 or a data sequence, and the time reference 128 can be understood as a relationship wherein any time point $t_c$ expressing time characteristics can be expressed in terms of the time reference $t_{ref}$. In mathematical terms, the relationship can be written as

$$t_c = t_c(t_{ref}), \qquad\qquad (1)$$

where $t_c(t_{ref})$ is a function of the time reference $t_{ref}$. In an embodiment, the time reference 134 is a real-time reference.

In an aspect, the invention provides a time stamping method in a telecommunication system. Time stamping is known as a service providing data with real-time characteristics, the time stamps for synchronisation of media streams, or other purposes. The real-time characteristics of data include, for example, the emission time of a predefined portion of data from the antenna unit 122 of the base station.

The base station 110 comprises an idle period generator 114 for generating an idle period 116 in the transmission of the base station 110.

The idle period 116 generated in the idle period generator 114 is delivered to the transceiver unit 118, wherein the idle period 116 is detected by a detecting unit 126. The time reference 134 is delivered to the detecting unit 126 from the time reference signal receiving unit 124, which provides the idle period 116 with time characteristics 130 proportional to the time reference 134. The detection of the idle period 116 is based on measuring the power of the transmission of the base station 110, wherein the power of the idle period 116 is weaker than the power of the transmission otherwise.

In an embodiment, the detecting unit 126 comprises a gauge 127 located between the base band unit 112 and the antenna unit 122 for performing a power measurement on the idle period 116. The detecting unit 126 also comprises an idle period time stamping unit not shown for providing the idle period 116 with time characteristics 130 proportional to the time reference 134 received by the detecting unit 126 from the time reference signal receiving unit 124. The idle period time stamping unit 146 may be implemented using a digital processor with suitable computer programs or by using an ASIC. In an embodiment, the tasks of the detecting unit 126 requiring signal processing are implemented in the radio network controller 140 or in the control unit 120 of the base station 110.

Figure 2 illustrates an idle period 200 and the time reference 202. The vertical axis 204A shows signal power in arbitrary units. The scale of the horizontal axis 204B is proportional to the time reference 202 such that any time point in the time axis 204B can be expressed in terms of the time reference 202. The time dimensions of the idle period 200 with respect to the time reference 202 are exaggerated for simplicity. In reality, the time scale between the reception of two successive time reference signals 128 may be of the order of seconds whereas the time scale of an idle period 200 may be of the order of milliseconds. However, the accuracy of the time reference 202 is usually better than the order of 300 ns. For a PPS receiver tracking 4 satellites, an absolute time accuracy better than 200 ns relative to the UTC is specified for a low-dynamic situation.

The time characteristics of the idle period 200 include, for example, the timing of the leading edge 216, the timing of the trailing edge 218, and the timing of a predefined portion 210 of the idle period 200. The timing of the portions 216, 218, 210 of the idle period 200 may be a real-time of transmission, for example. The timing of the leading edge 216 and the timing of the trailing edge 218 may be represented by time points 206, 208, respectively, when the power of the idle period 200 exceeds at least one threshold 220. Such a threshold 220 may be defined, for example, in terms of a reference transmit power 222 and a predefined gap 212 representing difference between the reference transmit power 222 and the threshold 220. The reference transmit power 222 may be, for example, an average transmit power or a maximum transmit power.

In an embodiment, the idle period generator 114 shown in Figure 1 is implemented in the digital signal processor of the base band unit 112. In an embodiment, the idle period 116, 200 is generated by weighting a signal so that a required time mask is achieved. In an embodiment, the length 214 of the idle period is 2560 chips, and the ramps associated with the leading edge 216 and the trailing edge are 27 chips long. The attenuation 224 associated with the idle period 200 with respect to the reference transmit power 222 may vary from 20 dB to 45 dB, for example. The large power dynamics due to attenuation 224 and the steep edges 216, 218 of the idle period 116, 200 enable efficient detection and identification of the idle period 116, 200 by means of power measurement of the transmission of the base station 110.

Supplementary information on the idle period 116, 200 is available in the 3GPP (3rd Generation Partnership Project) specifications 25.214 and 25.433. In an embodiment, the detecting unit 126 comprises a diode gauge 127 for power measurement operating at a radio frequency range. In an embodiment, the diode gauge 127 recognizes an idle period 116, 200 by detecting a decrease 212 in the transmit power of the idle period 116, 200. When a predefined threshold 220 in power is measured in the detecting unit 126, the time of measurement relative to the time reference 134, 202 is determined. In an embodiment, the time of measurement is a time characteristic of the idle period 116, 200.

At least one time characteristic 130, 206, 208, 210 of the idle period 116, 200 is delivered to the time stamping unit 146 connected to the detecting unit 126. In the time stamping unit 146, at least a portion of data to be transmitted from the base station 110 is provided with time characteristics proportional to the time reference 134, 202 by using at least one time characteristic 130, 206, 208, 210 of the idle period 116, 200.

In an embodiment, time characteristics proportional to the time reference provided for the data includes the time of emission or estimated time of emission of the data from the antenna unit 122 of the base station 110. Supplementary information related to idle periods in obtaining location information for mobile stations is available in 3GPP specifications 25.305 and 25.847, which are thereby incorporated by reference. In an embodiment, the time characteristics provided for the data are obtained from time characteristics 130, 206, 208 210 of the idle period 116, 200 by using the scheduling information of the data and the idle period 116, 200.

In an embodiment, timing $t_{IPDL}$ of a predefined portion 210 of the idle period 116, 200 is determined relative to the time reference 134, 202 by means of the power measurement, and at least a portion of data to be transmitted from the base station 110 is provided with time characteristics proportional to the time reference 134, 202 by using the timing $t_{IPDL}$ of the predefined portion 210 of the idle period 200. In an embodiment, the predefined portion 210 of the idle period 200 is defined such that the timing point $t_{IPDL}$ of the idle period 200 can be obtained as an average of timing 208 and 206 of the leading edge 216 and the trailing edge 218, respectively, of the idle period 200. In an embodiment, the timing $t_{IPDL}$ of the idle period 200 is defined in terms of a weighted average of the timing of the leading edge 216 and the trailing edge 218.

In an embodiment, the detecting unit 126 comprises a plurality of gauges 127 for providing a plurality of power measurements on the idle period 116, 200. In an embodiment, each measuring gauge 127 performs gauge-specific power measurements on the leading edge 216 and the trailing edge 218 of the idle period 200, and the gauge-specific measurements are averaged to obtain the timing $t_{IPDL}$ of the predefined portion 210 of the idle period 200.

In an embodiment, a predefined portion of a data stream to be transmitted from the base station 110 is provided with the time characteristics, and a portion of the data stream not provided time characteristics is provided with time characteristics by using time characteristics of the predefined portion of the data stream.

In an embodiment, the time stamping unit 146 is implemented in the radio network controller 140, for example in the serving location mobile center (SMLC). In an embodiment, the time stamping unit 146 is implemented in the radio network controller 140 by using a software application.

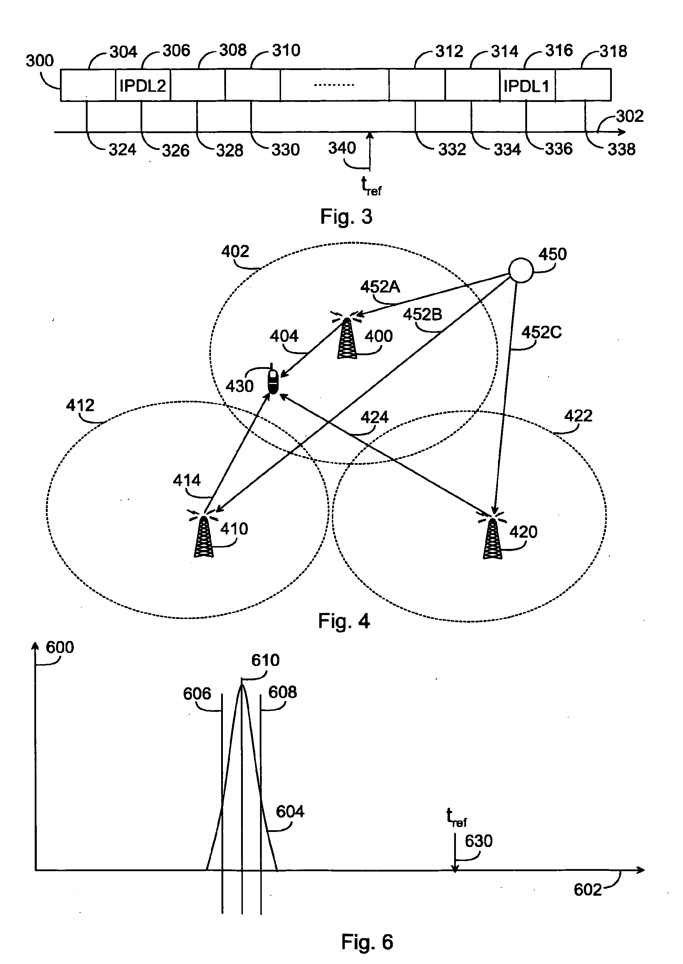

An example of a data structure to be transmitted from the base station 110 is shown in Figure 3. A frame 300 and a time reference 340 with respect to time axis 302 are shown. The frame is divided into sub-units 304, 306, 308, 310, 312, 314, 316, and 318 with time characteristics 324, 326, 328, 330, 332, 334, 336, and 338, respectively. In an embodiment, the sub-units from 304 to 318 of the frame are time slots with equal duration. The sub-units from 304 to 318 include at least a portion of data provided with the time characteristics. The sub-units 306, 316 including idle periods 116, 200 are also shown. In this context, these sub-units are called idle periods with reference numerals 306 and 316. The time characteristics of the idle periods 306 and 316 are identified with reference numerals 326 and 336, respectively.

In an embodiment, the detecting unit 126 is configured to determine time characteristics 326, 336 of a plurality of idle periods 306, 316 in a frame 300 relative to time reference 340, and the time stamping unit 146 is configured to provide the frame 300 with time characteristics proportional to the time reference 340 by using time characteristics of the plurality of idle periods 306, 316 in the frame 300.

In an embodiment, time characteristics 326, 336 of the plurality of idle periods 306, 316 are averaged taking into account the relative positions of the idle periods 306, 316 in the frame 300. The averaging enables a more reliable determination of the time characteristics of the frame 300.

In an embodiment, the time characteristics of the frame 300 are provided for a predefined portion, such as a predefined time slot and/or a predefined symbol sequence of the frame 300. In an embodiment, the predefined time slot is the first time slot 318 in the frame 300. In an embodiment, the predefined symbol sequence of the frame 300 is a pilot sequence.

In an embodiment, the time characteristics of the frame 300 are associated with the frame number of the frame 300.

In an embodiment, the base station 110 comprises an antenna unit 122 operationally connected to the idle period generator 114 for emitting the idle period 116, 200. When emitting the idle period 116, 200, a radio signal including the idle period 116, 200 is transmitted from the antenna 122 of the base station 110.

In an embodiment, the detecting unit 126 is configured to determine the time characteristics 206, 208, 210 of the idle period 116, 200 such that the uncertainty of the time interval between determining the time characteristics 206, 208, 210 of the idle period 116, 200 and emitting the idle period 116, 200 from the antenna unit 122 of the base station 110 is below a predefined value. In this context, the time point of determining time characteristics 206, 208, 210 of the idle period 116, 200 is the time point of the power measurement. The predefined value for the maximum of the uncertainty is dictated by the requirements of the telecommunication system. For example, if the accuracy requirement of observed time difference of arrival (OTDOA) is $\Delta t$, the uncertainty should not exceed $\Delta t$.

Configuring the detecting unit 126 includes locating the gauge 127 for the power measurement in the transceiver unit 118. The uncertainty of the time interval between determining the time characteristics 130, 206, 208, 210 of the idle period 116 and emitting the idle period 116 causes an error of time characteristics of the idle period 116, 200, which error is further transferred to the time characteristics of the data to be transmitted from the base station 110. An error in time characteristics of the data causes, for example, an error in determination of an observed time difference of arrival, and an error in a mobile station positioning.

If the time interval between determining time characteristics 206, 208, 210 of the idle period 116 and emitting the idle period 116 is known with a required accuracy, the time interval can be accounted in the real-time characteristics 206, 208, 210 of the idle period 116, 200 by adding the time interval to the time which was determined with the power measurement.

In an embodiment, the gauge 127 for power measurements is located between the base band unit 112 and the amplifier unit 117B, by which arrangement the effects of the modulator unit 117A on the time characterization of the idle period 116 are reduced.

In an embodiment, the gauge 127 for power measurements is located between the base band unit 112 and the filter unit 117C, by which arrangement the effects of the modulator unit 117A and the amplifier unit 117B on the time characterization of the idle period 116 are reduced.

In an embodiment, the gauge 127 for power measurements is located between the base band unit 112 and the antenna unit 122, by which arrangement the effects of the modulator unit 117A, the amplifier unit 117B, and the filter unit 117C o the time characterization of the idle period 116 are reduced.

In an embodiment, the detecting unit 126 is configured to determine time characteristics 130, 206, 208, 210 of the idle period 116 at a moment of emitting the idle period 116. The configuration can be performed, for example, by connecting the gauge 117 to the antenna feeder feeding the antenna 122. This embodiment is advantageous in systems where the delay of the idle period 116 between the base band unit 112 and the antenna unit 122 is not known with a predefined accuracy.

In an embodiment, the base station 110 is configured to synchronize transmission of the base station 110 by using the time characteristics 130, 206, 208, 210 of the idle period 116 relative to the time reference 134, 202. A clock of the base station 110, for example, may be adjusted, by using the time characteristics 130, 206, 208, 210 of the idle period such that the frames transmitted by the base station 110 remain synchronized over a predetermined period of time.

Figure 4 illustrates an example of a telecommunication system comprising base stations 400, 410, 420, a mobile station 430 and a time reference supply 450. The time reference supply 450 transmits time reference signals 452A, 452B, 45C, which are received by the time reference signal receiving units of the base stations 400, 410, and 420, respectively. The cells 402, 412, 422 of the base stations 400, 410 and 420, respectively, make up a cell structure, where the mobile station 430 is primarily located in the area of the serving cell 402.

In an embodiment, the telecommunication system comprises a positioning unit 148 operationally connected to the base station 110, 400 for positioning a mobile station 430 by using time characteristics of at least a portion of data to be transmitted from the base station 110. The positioning unit 148 can be connected to several base stations 400, 410, 420 in order to receive information, such as time characteristics of data, transmitted from the base stations 400, 410, 420. In an embodiment, the positioning unit 148 is implemented in the serving location mobile center (SMLC). In an embodiment, the positioning unit 148 is implemented in the radio network controller 140 by using a software application. The positioning unit 148 can also be located in the upper layers 150, 152 of the telecommunication system.

In an embodiment, the base station 110, 400 emits a symbol sequence 404 provided with time characteristics, which symbol sequence 404 is received by a mobile station 430. In an embodiment, the symbol sequence 404 is a pilot sequence, such as a primary common pilot channel. The mobile station 430 determines the time of arrival of the symbol sequence 404. In an embodiment, the mobile station 430 receives symbol sequences 414, 424 from plurality of base stations 400, 410, 420 and determines the observed time difference of arrival (OTDOA) of the symbol sequences 414, 424. In an embodiment, the mobile station 430 transmits the OTDOA results to the base station 110, 400 which delivers the OTDOA information to the positioning unit 148. The positioning unit 148 is aware of the real-time emission time of the symbol sequencies transmitted by the base stations 400, 410, 420 based on the determination of the time characteristics of the symbol sequences 404, 414, 424 emitted by the base stations 400, 410, 420. The position of the mobile station 430 can be determined in a manner known to a person skilled in the art by using the OTDOA information and the real-time characteristics of the emitted symbol sequences. In an embodiment, the measurement on a symbol sequence 414, 424 transmitted by a base station 410, 420 is performed while another base station 400 is transmitting an idle period 116, 200. In this manner, the transmit power of the base station 400 is temporarily lowered, thus reducing the multi-user interference caused by the base station 400, and i m-proving the quality of the time of arrival measurement on the symbol sequences 414, 424 transmitted by the base stations 410, 420. Especially, when a distance of a base station 400 is substantially less than the distances of other base stations 410, 420, the idle period transmission of the close-lying base station 400 is useful.

In an embodiment, the mobile station 430 is configured to detect the idle period 116, 200 emitted from the antenna unit 122 of the base station 110, 400, the mobile station 430 is configured to determine the time of arrival of the idle period 116, 200, and the positioning unit 148 is configured to position the mobile station 430 by using the time of arrival of the idle period 116, 200. The detection of the idle period 116, 200 may be based on detection of change in the receive power. The time of arrival determination and positioning may be carried out in a manner known to a person skilled in the art.

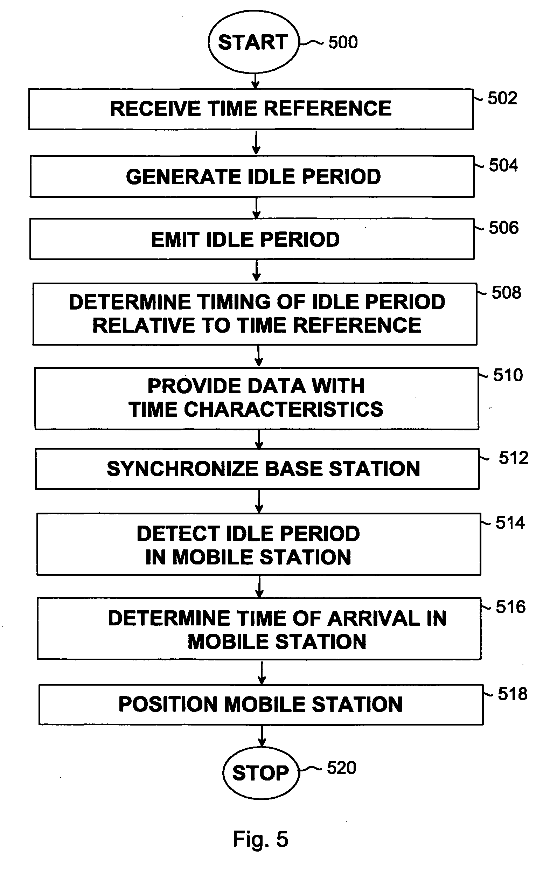

With reference to Figure 5, embodiments of the time stamping method are illustrated by means of a flow chart. The method is started in 500. In 502, a time reference signal 128, 452A is received by a base station 110, 400. In 504, an idle period 116, 200 in the transmission of a base station 110, 400 is generated in the base station 110, 400. In 506, an idle period 116, 200 is emitted by the base station 110, 400. In 508, time characteristics 206, 208, 210 of the idle period 116, 200 relative to the time reference 134, 202 are determined. A portion of data to be transmitted from the base station 110, 400 is provided with the time characteristics proportional to time reference 202 by using the time characteristics 130, 206, 208, 210 of the idle period 200 in 510. In 518, a mobile station 430 is positioned by using the time characteristics of the at least portion of data. In 512, the transmission of the base station 110, 400 is synchronized by using time characteristics 130, 206, 208, 210 of the idle period 116, 200 relative to the time reference 202. In 514, the idle period 116, 200, 404 emitted from an antenna unit 122 of the base station 110, 400 is detected in a mobile station 430. In 516, the time or arrival of the idle period 116, 200 is determined in the mobile station 430. In 520, the method is stopped.

In an aspect, the invention provides a time adjustment method in a telecommunication system. Figure 6 shows a diagram including an example of a test signal 604 and a time reference 630. The vertical axis 600 and the horizontal axis 602 show signal power and time in arbitrary units, respectively. Embodiments of the time adjustment method are exemplified with reference to Figures 1 and 4.

In the time adjustment method, time reference signal 128, 452A providing time reference 134 in the telecommunication system is received in the time reference signal receiving unit 124 of a base station 110, 400. A test signal 116, 604 is generated in the base station 110, 400, which test signal 116, 604 is detected by a detecting unit 126 in the base station 110. In an embodiment, the test signal 116, 604 is generated in the base band unit 112 of the base station 110.

The test signal 116, 604 is provided with the time characteristics proportional to the time reference 134, 630 based on the detection of the test signal 116 and the time reference 134, 630. The time characteristics include timing of a predefined portion of the test signal 604. The predefined portion of the test signal 116, 604 include, for example; a portion 608 of a leading edge, a portion 606 of a trailing edge, and the peak 610 of the test signal 604. The timing of the predefined portion of the test signal 116, 604 is, for example, the time of emission of the predefined portion 606, 608, 610 of the test signal 116, 604.

In an embodiment, the internal clock of the base station 110, 400 is real-time adjusted by using the test signal 116, 604 and the time reference 134, 630. In real-time adjustment, the time provided by the internal clock of the base station 110, 400 corresponds to the time of emission of a signal from the antenna unit 122.

In an embodiment, data transmitted from the base station 110, 400 is provided with time characteristics proportional to the time reference 630 by using time characteristics 606, 608, 610 of the test signal 604. For example, a predefined portion of frame 300 shown in Figure 3 is provided with the time of emission from the antenna unit 122.

In an embodiment, the test signal 604 is emitted from an antenna unit 122 of the base station 110, and the test signal 116, 604 is detected when emitting the test signal 604. In this manner, the delay occurring between the base band unit 112 and the antenna unit 122 can be compensated.

In an embodiment, a delay between generating the test signal 116, 604 and detecting the test signal 116, 604 is determined. In an embodiment, the delay is determined by a measuring the time difference between generating and detecting the test signal 116, 604 using the internal clock of the base station 110, 400.

In an embodiment, the base station 110, 400 is synchronized by using time characteristics 606, 608, 610 of the test signal 116, 604. A plurality of base stations 400, 410, 420 using the same time reference supply 450 can be synchronized accurately using the method according to the invention.

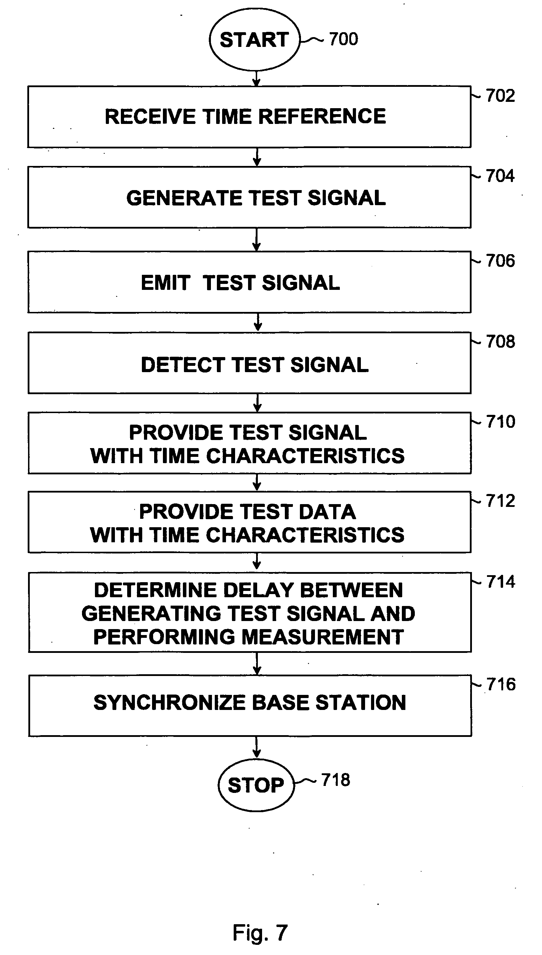

Embodiments of the time adjustment method are shown by means of a flow chart in Figure 7. In 700, the method is started. In 702, the time reference signal 128 is received. In 704, the test signal 604 is generated. In 706, the test signal 116, 604 is emitted from an antenna unit 122 of the base station 110. In 708, the test signal 116, 604 is detected in the base station 110. In 710, the test signal 116, 604 is provided with time characteristics proportional to the time reference 630. In 712, data transmitted from the base station 110 is provided with time characteristics proportional to the time reference 730 by using time characteristics of the test signal 116, 604. In 714, a delay between generating 704 the test signal 116, 604 and detecting 708 the test signal 116, 604 is determined. In 716, the base station 110 is synchronized by using the time characteristics of the test signal 116, 604. In 718, the method is stopped.

Even though the invention is described above with reference to examples according to the accompanying drawings, it is clear that the invention is not restricted thereto but it can be modified in several ways within the scope of the appended claims.

**Claims**

**1.** A time stamping method in a telecommunication system, comprising:

    receiving (502), in a base station, a time reference signal providing time reference in the telecommunication system, **characterized by**
    generating (504) an idle period in the transmission of the base station;
    determining (508), in the base station, time characteristics of the idle period relative to the time reference by means of a power measurement on the idle period; and
    providing (510) at least a portion of data to be transmitted from the base station with time characteristics proportional to the time reference by using time characteristics of the idle period.

**2.** The method of claim 1, **characterized by** positioning (518) a mobile station by using time characteristics of the at least portion of data.

3. The method of claim 1, **characterized by** emitting (506) the idle period from an antenna unit of the base station; and determining (508) time characteristics of the idle period such that an uncertainty of a time interval between determining time characteristics of the idle period and emitting the idle period from the antenna unit of the base station is below a predefined value.

4. The method of claim 1, **characterized by** emitting (506) the idle period from an antenna unit of the base station; and determining (508) time characteristics of the idle period at a moment of emitting the idle period from the antenna unit of the base station.

5. The method of claim 1, **characterized by** determining (508) timing of a predefined portion of the idle period relative to the time reference by means of the power measurement; and
providing (510) the at least a portion of data to be transmitted from the base station with time characteristics proportional to the time reference by using the timing of the predefined portion of the idle period.

6. The method of claim 1, **characterized by** determining (508) time characteristics of an idle period in a frame relative to the time reference; and
providing (510) the frame with the time characteristics proportional to the time reference by using time characteristics of the idle period in the frame.

7. The method of claim 1, **characterized by** emitting (506) the idle period from an antenna unit of the base station;
detecting (514), in a mobile station, the idle period emitted from the antenna of the base station;
determining (516) the time of arrival of the idle period in the mobile station; and
positioning (518) the mobile station by using the time of arrival of the idle period.

8. The method of claim 1, **characterized by** synchronizing (512) the transmission of the base station by using the time characteristics of the idle period relative to the time reference.

9. A telecommunication system comprising:

a base station (110) for providing radio transmission and reception for mobile stations, **characterized in that** the base station (110) comprises a time reference signal receiving unit (124) for receiving a time reference signal (128) providing time reference (134, 202) in the telecommunication system;
the base station (110) comprises an idle period generator (114) for generating an idle period (116, 200) in the transmission of the base station (110);
the base station (110) comprises a detecting unit (126) operationally connected to the idle period generator (114) and the time reference signal receiving unit (124) for determining time characteristics (130, 206, 208, 210) of the idle period (116, 200) relative to the time reference (134, 202) by means of a power measurement; and
the telecommunications system further comprises a time stamping unit (146), operationally connected to the detecting unit (126), for providing at least a portion of data to be transmitted from the base station (110) with the time characteristics proportional to the time reference (134, 202) by using the time characteristics (130, 206, 208, 210) of the idle period (116, 200).

10. The telecommunication system of claim 9, **characterized in that** the telecommunications system further comprises a positioning unit (148) operationally connected to the base station (110), for positioning a mobile station (430) by using time characteristics of the at least a portion of data.

11. The telecommunication system of claim 9, **characterized in that** the base station (110) comprises an antenna unit (122) operationally connected to the idle period generator (114) for emitting the idle period (116); and
the detecting unit (126) is configured to determine time characteristics (130 206, 208, 210) of the idle period (116, 200) such that the uncertainty of the time interval between determining time characteristics (130, 206, 208, 210) of the idle period (116) and emitting the idle period (116, 200) from the antenna unit (122) of the base station (110) is below a predetermined value.

12. The telecommunication system of claim 9, **characterized in that** the base station (110) comprises an antenna unit (122) operationally connected to the idle period generator (114) for emitting the idle period (116, 200); and
the detecting unit (126) is configured to determine time characteristics (130, 206, 208, 210) of the idle period (116, 200) at a moment of emitting the idle period (116, 200).

13. The telecommunication system of claim 9, **characterized in that** the detecting unit (126) is configured to determine timing of a predefined portion (210) of the idle period (116, 200) relative to the time reference (134, 202) by means of the power measurement; and

the time stamping unit (146) is configured to provide the at least a portion of data to be transmitted from the base station (210) with time characteristics proportional to the time reference (202) by using the timing of the predefined portion (210) of the idle period (116, 200).

14. The telecommunication system of claim 9, **characterized in that** the detecting unit (126) is configured to determine the time characteristics (326, 336) of an idle period (306, 316) in a frame (300) relative to time reference (340); and

the time stamping unit (146) is configured to provide the frame (300) with the time characteristics proportional to the time reference (340) by using time characteristics (326, 336) the idle period (306, 316) in the frame (300).

15. The telecommunication system of claim 9, **characterized in that** the base station (110, 400) comprises an antenna unit (122) operationally connected to the idle period generator (114) for emitting the idle period (116, 200);

the telecommunication system further comprises a mobile station (430) configured to detect the idle period (116, 200) emitted from the antenna unit (122) of the base station (110, 400);

the mobile station (430) is configured to determine the time of arrival of the idle period (116, 200); and

the positioning unit (148) is configured to position the mobile station (430) by using the time of arrival of the idle period (116, 200).

16. The telecommunication system of claim 9, **characterized in that** the base station (110) is configured to synchronize transmission of the base station (110) by using time characteristics (130, 206, 208, 210) of the idle period (116, 200) relative to the time reference (134, 202).

17. A time stamping mechanism in a telecommunication system, comprising:

receiving means (124) for receiving, in a base station, a time reference signal providing time reference in the telecommunication system, **characterized in that** the time adjustment mechanism further comprises:

generating means (114) for generating an idle period in the transmission of a base station;

determining means for (126) determining, in the base station, time characteristics of the idle period relative to the time reference by means of a power measurement; and

providing means (146) for providing at least a portion of data to be transmitted from the base station with time characteristics proportional to the time reference by using time characteristics of the idle period.

**Patentansprüche**

1. Zeitstempelverfahren in einem Telekommunikationssystem, umfassend:

Empfangen (502) eines Zeitreferenzsignals in einer Basisstation, welches Signal eine Referenzzeit im Telekommunikationssystem bereitstellt, **gekennzeichnet durch**

Erzeugen (504) einer Stillstandsperiode in der Übertragung der Basisstation;

Bestimmen (508) von Zeitmerkmalen der Stillstandsperiode in der Basisstation relativ zur Referenzzeit mittels einer Leistungsmessung auf der Stillstandsperiode; und

Versorgen (510) mindestens eines Teils der von der Basisstation zu übertragenden Daten mit zur Referenzzeit proportionalen Zeitmerkmalen unter Verwendung von Zeitmerkmalen der Stillstandsperiode.

2. Verfahren nach Anspruch 1, **gekennzeichnet durch** Positionieren (518) einer Mobilstation unter Verwendung von Zeitmerkmalen des mindestens einen Teils der Daten.

3. Verfahren nach Anspruch 1, **gekennzeichnet durch** Ausstrahlen (506) der Stillstandsperiode von einer Antenneneinheit der Basisstation; und

Bestimmen (508) von Zeitmerkmalen der Stillstandsperiode derart, dass eine Ungewissheit eines Zeitintervalls zwischen dem Bestimmen von Zeitmerkmalen der Stillstandsperiode und dem Ausstrahlen der Stillstandsperiode von der Antenneneinheit der Basisstation unter einem vordefinierten Wert liegt.

**4.** Verfahren nach Anspruch 1, **gekennzeichnet durch** Ausstrahlen (506) der Stillstandsperiode von einer Antenneneinheit der Basisstation; und

Bestimmen (508) von Zeitmerkmalen der Stillstandsperiode in einem Moment des Ausstrahlens (506) der Stillstandsperiode von der Antenneneinheit der Basisstation.

**5.** Verfahren nach Anspruch 1, **gekennzeichnet durch**

Bestimmen (508) des Timing eines vordefinierten Teils der Stillstandsperiode relativ zur Referenzzeit mittels der Leistungsmessung; und

Versorgen (510) mindestens eines Teils der von der Basisstation zu übertragenden Daten mit zur Referenzzeit proportionalen Zeitmerkmalen unter Verwendung des Timing des vordefinierten Teils der Stillstandsperiode.

**6.** Verfahren nach Anspruch 1, **gekennzeichnet durch**

Bestimmen (508) von Zeitmerkmalen einer Stillstandsperiode in einem Frame relativ zur Referenzzeit; und

Versorgen (510) des Frames mit den zur Referenzzeit proportionalen Zeitmerkmalen unter Verwendung von Zeitmerkmalen der Stillstandsperiode in dem Frame.

**7.** Verfahren nach Anspruch 1, **gekennzeichnet durch** Ausstrahlen (506) der Stillstandsperiode von einer Antenneneinheit der Basisstation;

Detektieren (514), in einer Mobilstation, der von der Antenne der Basisstation ausgestrahlten Stillstandsperiode;

Bestimmen (516) der Ankunftszeit der Stillstandsperiode in der Mobilstation; und

Positionieren (518) der Mobilstation unter Verwendung der Ankunftszeit der Stillstandsperiode.

**8.** Verfahren nach Anspruch 1, **gekennzeichnet durch** Synchronisieren (512) der Übertragung der Basisstation unter Verwendung der Zeitmerkmale der Stillstandsperiode relativ zur Referenzzeit.

**9.** Telekommunikationssystem, umfassend:

eine Basisstation (110) zum Bereitstellen von Funkübertragung und -empfang für Mobilstationen, **dadurch gekennzeichnet, dass**

die Basisstation (110) eine Zeitreferenzsignalempfangseinheit (124) zum Empfangen eines Zeitreferenzsignals (128) umfasst, welches eine Referenzzeit (134, 202) im Telekommunikationssystem bereitstellt;

die Basisstation (110) einen Stillstandsperiodengenerator (114) zum Erzeugen einer Stillstandsperiode (116, 200) in der Übertragung der Basisstation (110) umfasst;

die Basisstation (110) eine mit dem Stillstandsperiodengenerator (114) und der Zeitreferenzsignalempfangseinheit (124) betrieblich verbundene Detektionseinheit (126) umfasst, um Zeitmerkmale (130, 206, 208, 210) der Stillstandsperiode (116, 200) relativ zur Referenzzeit (134, 202) mittels einer Leistungsmessung zu bestimmen; und

das Telekommunikationssystem ferner eine mit der Detektionseinheit (126) betrieblich verbundene Zeitstempeleinheit (146) umfasst, um mindestens einen Teil der von der Basisstation (110) zu übertragenden Daten mit den zur Referenzzeit (134, 202) proportionalen Zeitmerkmalen zu versorgen, indem die Zeitmerkmale (130, 206, 208, 210) der Stillstandsperiode (116, 200) verwendet werden.

**10.** Telekommunikationssystem nach Anspruch 9, **dadurch gekennzeichnet, dass** das Telekommunikationssystem ferner eine mit der Basisstation (110) betrieblich verbundene Positioniereinheit (148) zum Positionieren einer Mobilstation (430) unter Verwendung von Zeitmerkmalen des mindestens einen Teils der Daten umfasst.

**11.** Telekommunikationssystem nach Anspruch 9, **dadurch gekennzeichnet, dass** die Basisstation (110) eine mit dem Stillstandsperiodengenerator (114) betrieblich verbundene Antenneneinheit (122) umfasst, um die Stillstandsperiode (116) auszustrahlen; und

die Detektionseinheit (126) konfiguriert ist, Zeitmerkmale (130, 206, 208, 210) der Stillstandsperiode (116, 200) zu bestimmen, derart, dass die Ungewissheit des Zeitintervalls zwischen dem Bestimmen von Zeitmerkmalen (130, 206, 208, 210) der Stillstandsperiode (116) und dem Ausstrahlen der Stillstandsperiode (116, 200) von der Antenneneinheit (122) der Basisstation (110) unter einem vorherbestimmten Wert liegt.

**12.** Telekommunikationssystem nach Anspruch 9, **dadurch gekennzeichnet, dass** die Basisstation (110) mit dem Stillstandsperiodengenerator (114) betrieblich verbundene Antenneneinheit (122) zum Ausstrahlen der Stillstandsperiode (116, 200) umfasst; und

die Detektionseinheit (126) konfiguriert ist, Zeitmerkmale (130, 206, 208, 210) der Stillstandsperiode (116, 200) in einem Moment des Ausstrahlens der Stillstandsperiode (116, 200) zu bestimmen.

13. Telekommunikationssystem nach Anspruch 9, **dadurch gekennzeichnet, dass** die Detektionseinheit (126) konfiguriert ist, das Timing eines vordefinierten Teils (210) der Stillstandsperiode (116, 200) relativ zur Referenzzeit (134, 202) mittels der Leistungsmessung zu bestimmen; und
die Zeitstempeleinheit (146) konfiguriert ist, den mindestens einen Teil der von der Basisstation (210) zu übertragenden Daten mit zur Referenzzeit (202) proportionalen Zeitmerkmalen zu versorgen, indem das Timing des vordefinierten Teils (210) der Stillstandsperiode (116, 200) verwendet wird.

14. Telekommunikationssystem nach Anspruch 9, **dadurch gekennzeichnet, dass** die Detektionseinheit (126) konfiguriert ist, die Zeitmerkmale (326, 336) einer Stillstandsperiode (306, 316) in einem Frame (300) relativ zur Referenzzeit (340) zu bestimmen; und
die Zeitstempeleinheit (146) konfiguriert ist, den Frame (300) mit den zur Referenzzeit (340) proportionalen Zeitmerkmalen zu versorgen, indem Zeitmerkmerkmale (326, 336) der Stillstandsperiode (306, 316) in dem Frame (300) verwendet werden.

15. Telekommunikationssystem nach Anspruch 9, **dadurch gekennzeichnet, dass** die Basisstation (110, 400) eine mit dem Stillstandsperiodengenerator (114) betrieblich verbundene Antenneneinheit (122) zum Ausstrahlen der Stillstandsperiode (116, 200) umfasst;
das Telekommunikationssystem ferner eine Mobilstation (430) umfasst, die konfiguriert ist, die von der Antenneneinheit (122) der Basisstation (110, 400) ausgestrahlte Stillstandsperiode (116, 200) zu detektieren;
die Mobilstation (430) konfiguriert ist, die Ankunftszeit der Stillstandsperiode (116, 200) zu bestimmen; und
die Positioniereinheit (148) konfiguriert ist, die Mobilstation (430) unter Verwendung der Ankunftszeit der Stillstandsperiode (116, 200) zu positionieren.

16. Telekommunikationssystem nach Anspruch 9, **dadurch gekennzeichnet, dass** die Basisstation (110) konfiguriert ist, die Übertragung der Basisstation (110) zu synchronisieren, indem Zeitmerkmale (130, 206, 208, 210) der Stillstandsperiode (116, 200) relativ zur Referenzzeit (134, 202) verwendet werden.

17. Zeitstempelmechanismus in einem Telekommunikationssystem, umfassend:

Empfangsmittel (124) zum Empfangen, in einer Basisstation, eines Zeitreferenzsignals, das eine Referenzzeit im Telekommunikationssystem bereitstellt, **dadurch gekennzeichnet, dass** der Zeitstempelmechanismus ferner umfasst:

Erzeugungsmittel (114) zum Erzeugen einer Stillstandsperiode in der Übertragung einer Basisstation;
Bestimmungsmittel (126) zum Bestimmen, in der Basisstation, von Zeitmerkmalen der Stillstandsperiode relative zur Referenzzeit mittels einer Leistungsmessung; und
Versorgungsmittel (146) zum Versorgen mindestens eines Teils der von der Basisstation zu übertragenden Daten mit den zur Referenzzeit proportionalen Zeitmerkmalen unter Verwendung von Zeitmerkmalen der Stillstandsperiode.

## Revendications

1. Procédé d'estampillage temporel dans un système de télécommunication, comprenant l'étape ci-dessous consistant à :

recevoir (502), dans une station de base, un signal de référence temporelle fournissant une référence temporelle dans le système de télécommunication, **caractérisé par** les étapes ci-dessous consistant à :

générer (504) une période de repos dans la transmission de la station de base ;
déterminer (508), dans la station de base, des caractéristiques temporelles de la période de repos relativement à la référence temporelle, au moyen d'une mesure de puissance sur la période de repos ; et
fournir (510), à au moins une partie de données à transmettre à partir de la station de base, des caractéristiques temporelles proportionnelles à la référence temporelle, en faisant appel à des caractéristiques temporelles de la période de repos.

**2.** Procédé selon la revendication 1, **caractérisé en ce qu'**il comporte l'étape consistant à positionner (518) une station mobile en faisant appel aux caractéristiques temporelles de ladite au moins une partie de données.

**3.** Procédé selon la revendication 1, **caractérisé en ce qu'**il comporte les étapes ci-après consistant à émettre (506) la période de repos à partir d'une unité d'antenne de la station de base ; et déterminer (508) des caractéristiques temporelles de la période de repos de sorte qu'une incertitude d'un intervalle de temps entre la détermination de caractéristiques temporelles de la période de repos et l'émission de la période de repos à partir de l'unité d'antenne de la station de base est inférieure à une valeur prédéfinie.

**4.** Procédé selon la revendication 1, **caractérisé en ce qu'**il comporte les étapes ci-après consistant à émettre (506) la période de repos à partir d'une unité d'antenne de la station de base ; et déterminer (508) des caractéristiques temporelles de la période de repos au moment d'émettre la période de repos à partir de l'unité d'antenne de la station de base.

**5.** Procédé selon la revendication 1, **caractérisé en ce qu'**il comporte les étapes ci-après consistant à déterminer (508) la synchronisation d'une partie prédéfinie de la période de repos relativement à la référence temporelle au moyen de la mesure de puissance ; et fournir (510), à ladite au moins une partie de données à transmettre à partir de la station de base, des caractéristiques temporelles proportionnelles à la référence temporelle, en faisant appel à la synchronisation de la partie prédéfinie de la période de repos.

**6.** Procédé selon la revendication 1, **caractérisé en ce qu'**il comporte les étapes ci-après consistant à déterminer (508) des caractéristiques temporelles d'une période de repos dans une trame relativement à la référence temporelle ; et fournir (510) à la trame les caractéristiques temporelles proportionnelles à la référence temporelle, en faisant appel à des caractéristiques temporelles de la période de repos dans la trame.

**7.** Procédé selon la revendication 1, **caractérisé en ce qu'**il comporte les étapes ci-après consistant à émettre (506) la période de repos à partir d'une unité d'antenne de la station de base ; détecter (514), dans une station mobile, la période de repos émise à partir de l'antenne de la station de base ; déterminer (516) l'instant d'arrivée de la période de repos dans la station mobile ; et positionner (518) la station mobile en utilisant l'instant d'arrivée de la période de repos.

**8.** Procédé selon la revendication 1, **caractérisé par** l'étape consistant à synchroniser (512) la transmission de la station de base en utilisant les caractéristiques temporelles de la période de repos relativement à la référence temporelle.

**9.** Système de télécommunication, comprenant :

une station de base (110) destinée à fournir une transmission et une réception radio pour les stations mobiles, **caractérisé en ce que** :

la station de base (110) comprend une unité de réception de signaux de référence temporelle (124) pour recevoir un signal de référence temporelle (128) fournissant une référence temporelle (134, 202) dans le système de télécommunication ;
la station de base (110) comprend un générateur de périodes de repos (114) pour générer une période de repos (116, 200) dans la transmission de la station de base (110) ;
la station de base (110) comprend une unité de détection (126) fonctionnellement connectée au générateur de périodes de repos (114) et à l'unité de réception de signaux de référence temporelle (124) pour déterminer des caractéristiques temporelles (130, 206, 208, 210) de la période de repos (116, 200) relativement à la référence temporelle (134, 202) au moyen d'une mesure de puissance ; et
le système de télécommunication comprend en outre une unité d'estampillage temporel (146), fonctionnellement connectée à l'unité de détection (126), pour fournir, à au moins une partie de données à transmettre à partir de la station de base (110), les caractéristiques temporelles proportionnelles à la référence temporelle (134, 202) en faisant appel aux caractéristiques temporelles (130, 206, 208, 210) de la période de repos (116, 200).

**10.** Système de télécommunication selon la revendication 9, **caractérisé en ce que** le système de télécommunication comprend en outre une unité de positionnement (148) fonctionnellement connectée à la station de base (110), pour positionner une station mobile (430) en faisant appel à des caractéristiques temporelles de ladite au moins une partie de données.

**11.** Système de télécommunication selon la revendication 9, **caractérisé en ce que** la station de base (110) comprend une unité d'antenne (122) fonctionnellement connectée au générateur de périodes de repos (114) pour émettre la période de repos (116) ; et
l'unité de détection (126) est configurée de manière à déterminer des caractéristiques temporelles (130, 206, 208, 210) de la période de repos (116, 200), de sorte que l'incertitude de l'intervalle de temps entre la détermination de caractéristiques temporelles (130, 206, 208, 210) de la période de repos (116) et l'émission de la période de repos (116, 200) à partir de l'unité d'antenne (122) de la station de base (110) est inférieure à une valeur prédéterminée.

**12.** Système de télécommunication selon la revendication 9, **caractérisé en ce que** la station de base (110) comprend une unité d'antenne (122) fonctionnellement connectée au générateur de périodes de repos (114) pour émettre la période de repos (116, 200) ; et
l'unité de détection (126) est configurée de manière à déterminer des caractéristiques temporelles (130, 206, 208, 210) de la période de repos (116, 200) au moment d'émettre la période de repos (116, 200).

**13.** Système de télécommunication selon la revendication 9, **caractérisé en ce que** l'unité de détection (126) est configurée de manière à déterminer la synchronisation d'une partie prédéfinie (210) de la période de repos (116, 200) relativement à la référence temporelle (134, 202) au moyen de la mesure de puissance ; et
l'unité d'estampillage temporel (146) est configurée de manière à fournir, à ladite au moins une partie de données à transmettre à partir de la station de base (210), des caractéristiques temporelles proportionnelles à la référence temporelle (202), en faisant appel à la synchronisation de la partie prédéfinie (210) de la période de repos (116, 200).

**14.** Système de télécommunication selon la revendication 9, **caractérisé en ce que** l'unité de détection (126) est configurée de manière à déterminer les caractéristiques temporelles (326, 336) d'une période de repos (306, 316) dans une trame (300) relativement à une référence temporelle (340) ; et
l'unité d'estampillage temporel (146) est configurée de manière à fournir à la trame (300) les caractéristiques temporelles proportionnelles à la référence temporelle (340), en utilisant des caractéristiques temporelles (326, 336) de la période de repos (306, 316) dans la trame (300).

**15.** Système de télécommunication selon la revendication 9, **caractérisé en ce que** la station de base (110, 400) comprend une unité d'antenne (122) fonctionnellement connectée au générateur de périodes de repos (114) pour émettre la période de repos (116, 200) ;
le système de télécommunication comprend en outre une station mobile (430) configurée de manière à détecter la période de repos (116, 200) émise à partir de l'unité d'antenne (122) à partir de la station de base (110, 400) ;
la station mobile (430) est configurée de manière à déterminer l'instant d'arrivée de la période de repos (116, 200) ; et
l'unité de positionnement (148) est configurée de manière à positionner la station mobile (430) en utilisant l'instant d'arrivée de la période de repos (116, 200).

**16.** Système de télécommunication selon la revendication 9, **caractérisé en ce que** la station de base (110) est configurée de manière à synchroniser la transmission de la station de base (110) en faisant appel à des caractéristiques temporelles (130, 206, 208, 210) de la période de repos (116, 200) relativement à la référence temporelle (134, 202).

**17.** Mécanisme d'estampillage temporel dans un système de télécommunication, comprenant :

un moyen de réception (124) pour recevoir, dans une station de base, un signal de référence temporelle fournissant une référence temporelle dans le système de télécommunication, **caractérisé en ce que** le mécanisme d'estampillage temporel comprend en outre :

un moyen de génération (114) pour générer une période de repos dans la transmission d'une station de base ;
un moyen de détermination (126) pour déterminer, dans la station de base, des caractéristiques temporelles de la période de repos relativement à la référence temporelle, au moyen d'une mesure de puissance ; et
un moyen de fourniture (146) pour fournir, à au moins une partie de données à transmettre à partir de la station de base, des caractéristiques temporelles proportionnelles à la référence temporelle, en faisant appel à des caractéristiques temporelles de la période de repos.

Fig. 1

Fig. 2

Fig. 3

Fig. 4

Fig. 6

START ~ 500

RECEIVE TIME REFERENCE ~ 502

GENERATE IDLE PERIOD ~ 504

EMIT IDLE PERIOD ~ 506

DETERMINE TIMING OF IDLE PERIOD
RELATIVE TO TIME REFERENCE ~ 508

PROVIDE DATA WITH
TIME CHARACTERISTICS ~ 510

SYNCHRONIZE BASE STATION ~ 512

DETECT IDLE PERIOD
IN MOBILE STATION ~ 514

DETERMINE TIME OF ARRIVAL IN
MOBILE STATION ~ 516

POSITION MOBILE STATION ~ 518

STOP ~ 520

Fig. 5

START ~ 700

RECEIVE TIME REFERENCE ~ 702

GENERATE TEST SIGNAL ~ 704

EMIT TEST SIGNAL ~ 706

DETECT TEST SIGNAL ~ 708

PROVIDE TEST SIGNAL
WITH TIME CHARACTERISTICS ~ 710

PROVIDE TEST DATA
WITH TIME CHARACTERISTICS ~ 712

DETERMINE DELAY BETWEEN
GENERATING TEST SIGNAL AND
PERFORMING MEASUREMENT ~ 714

SYNCHRONIZE BASE STATION ~ 716

STOP ~ 718

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1174726 A